# EUROPÄISCHE PATENTANMELDUNG

(11) **EP 0 615 783 A1**
(43) Veröffentlichungstag der Anmeldung: **21.09.1994**
(21) Anmeldenummer: 93104293.1
(22) Anmeldetag: 16.03.1993
(51) Int. Cl.: B01L 9/04, B01L 7/02, B01D 3/08

(54) **Schutzvorrichtung für Rotationsverdampfer**

(71) Anmelder: RESONA INNOVATION AG, CH-9202 Gossau (CH)
(72) Erfinder: Zellweger, Adolf, CH-9202 Gossau (CH)
(74) Vertreter: Troesch Scheidegger Werner AG

(57) **Zusammenfassung**

Eine Schutzvorrichtung, insbesondere geeignet für ein Heizbad (2) für Rotationsverdampfer, umfasst eine, das Heizbad wenigstens teilweise überdeckende Schutzhaube (20). Diese Schutzhaube ist mindestens zweiteilig ausgebildet und umfasst einen frontseitig am Heizbad angeordneten, wenigstens teilweise transparenten Sichtschutz (22) und ein vom Heizbad abhebbares und/oder wegschwenkbares Deckteil (24). Zwischen Sichtschutz und Deckteil ist mindestens ein Zwischenraum (32) entlang eines oder mehrerer Abschnitte ausgebildet, damit der Sichtschutz beim Betreiben des Heizbades zwangshinterlüftet wird.

## Beschreibung

Die vorliegende Erfindung betrifft eine Schutzvorrichtung, insbesondere geeignet für ein Heizbad für Rotationsverdampfer, umfassend eine das Heizbad wenigstens teilweise überdeckende Schutzhaube, ein Heizbad und eine Hebeeinrichtung für das Anheben und Absenken mindestens eines in einem Heizbad zu erwärmenden Rotationsgefässes, sowie eine Verwendung des Heizbades.

Dem Faktor Sicherheit bei chemischen Anlagen, Geräten und Laboreinrichtungen wird vermehrt erhöhte Bedeutung beigemessen, weshalb es wesentlich ist, dass derartige Einrichtungen mit den notwendigen Schutzmassnahmen versehen sind.

So sind insbesondere Heizbäder für Rotationsverdampfer mit Schutzhauben versehen, damit im Falle von unkontrollierten chemischen Reaktionen, dem Entweichen von Dämpfen, Spritzern und selbst bei Explosionen und Implosionen das Betriebspersonal ausreichend geschützt ist. Diese Schutzhauben sind entweder fest an den Laborgeräten befestigt, wodurch die Bedienung der Laborgeräte erschwert wird, oder aber diese Schutzhauben oder Schutzblenden sind derart umständlich handhabbar, dass sie eher ein zusätzliches Unfallrisiko darstellen, als eine effiziente Schutzmassnahme.

In der WO-88/06063 werden in Fig. 13 effiziente Schutzvorrichtungen aus Plexiglas dargestellt, mittels welchen ein komplettes Abdecken sämtlicher Apparateteile eines Rotationsverdampfers möglich ist. Diese Glasschutzelemente sind klapp- bzw. schwenkbar ausgebildet oder an einer Hebeeinrichtung bewegbar befestigt, wodurch die Apparateteile zugäglich sind. Der Nachteil dieser Schutzelemente liegt darin, dass sie anlaufanfällig sind, insbesondere bei Verwendung eines Wasserbades, und zudem im Falle von Explosionen ungenügenden Schutz bieten.

Es ist daher eine Aufgabe der vorliegendenden Erfindung, eine Schutzvorrichtung vorzuschlagen, mittels welcher eine Bedienungsperson einer chemischen Apparatur mit Heizbad, wie insbesondere eines Rotationsverdampfers, ausreichend schützbar ist, wobei die Apparatur visuell überwachbar bleibt, indem keine Gefahr des übermässigen Anlaufens von transparenten Bereichen besteht, und indem zudem auch ein ausreichender Schutz bei möglichen Implosionen und Explosionen besteht.

Die erfindungsgemässe Aufgabe wird mittels einer Schutzvorrichtung gemäss dem Wortlaut insbesondere nach Anspruch 1 gelöst.

Vorgeschlagen wird, dass insbesondere für ein Heizbad eine wenigstens das Heizbad teilweise überdeckende Schutzhaube vorgesehen ist, wobei die Schutzhaube mindestens zweiteilig ausgebildet ist, umfassend einen frontseitig beispielsweise am Heizbad oder am Grundgehäuse eines Hebesystems angeordneten, wenigstens teilweise transparenten Sichtschutz und ein vom Heizbad abhebbares und/oder wegschwenkbares Deckteil. Erfindungswesentlich dabei ist, dass zwischen dem Sichtschutz und dem Deckteil ein Zwischenraum bzw. ein Spalt ausgebildet ist, damit der Sichtschutz beim Betreiben des Heizbades mittels der durch diesen Zwischenraum bzw. Spalt durchströmenden erhitzten aufsteigenden Luft zwangshinterlüftet wird. Durch dieses strömungstechnische Gebilde findet eine aktive Hinterlüftung statt.

Vorzugsweise ist dieser Sichtschutz fest und schräg angewinkelt angeordnet in bezug zum Deckteil und derart dimensioniert, dass eine Bedienungsperson von einem im Heizbad angeordneten Rotationskolben vollständig geschützt ist. Durch das feste Anordnen dieses Sichtschutzes ist die Bedienungsperson auch im Falle von Implosionen und Explosionen geschützt, da der Sichtschutz durch die Druckwelle nicht weggeklappt bzw. weggeschwenkt werden kann. Damit dieser Sichtschutz ausreichend transparent ist, ist er vorzugsweise aus Glas oder einem transparenten Kunststoff, wie beispielsweise Acrylglas (PMMA), Polycarbonat, transparentem Copolyamid, Polysulfon, usw., gefertigt. Welcher transparente Kunststoff schliesslich gewählt wird, hängt von den Bedingungen bzw. Anforderungen ab, welche an einen derartigen Kunststoff gestellt werden. Um einen hohen Implosions- und Explosionsschutz zu gewährleisten, ist hohe Festigkeit gefordert, bei Verwendung eines Wasserbades ist es wesentlich, dass die Transparenz des Kunststoffes auch bei Wasserdampfbedingungen gewährleistet bleibt, bei Verwendung gewisser Chemikalien kann ggf. die Chemikalienbeständigkeit eine entscheidende Rolle spielen, etc.

Das Deckteil ist vorzugsweise um eine wenigstens nahezu endständige Achse im Bereich des Heizbades entgegengesetzt zum Sichtschutz schwenkbar gelagert, damit beim Aufklappen dieses Deckteils eine Bedienungsperson leicht Zugang findet, beispielsweise zu einem Rotationskolben im Heizbad. Das Deckteil kann entweder aus einem verstärkten Kunststoff oder aber aus Metall gefertigt sein, wie insbesondere beispielsweise Eisenblech oder Aluminium. Durch die Verwendung eines Metalls bietet das Deckteil auch einen relativ hohen Implosions- und Explosionsschutz, selbst wenn es relativ leicht bzw. dünnwandig ausgebildet ist. Damit vom Wasserbad aufsteigender Wasserdampf nicht zu einer übermässigen Beschlagung des Deckteiles führt bzw. seitlich entweicht, kann an der Unterseite des Deckteils ein Abtropfkegel bzw. eine Abtropfglocke angeordnet sein, an welcher das kondensierte Wasser wieder ins das Heizbad zurücktropft.

Weitere mögliche Ausführungsvarianten der erfindungsgemässen Schutzvorrichtung sind in den abhängigen Ansprüchen 2 bis 7 charakterisiert.

Weiter vorgeschlagen wird ein Heizbad mit Hebeeinrichtung für das Anheben und Absenken mindestens eines im Heizbad zu erwärmenden Rotationsgefässes, umfassend eine erfindungsgemäss definierte Schutzvorrichtung, wobei das Deckteil mit der Hebeeinrichtung verbunden ist, derart, dass beim Anheben des Rotationsgefässes aus dem Heizbad das Deckteil mitangehoben wird. Diese Ausgestaltung des Heizbades ermöglicht ein sicheres Arbeiten an dieser Laborvorrichtung, ohne dass je eines der erwähnten Schutzelemente manuell weg- oder zugeschwenkt werden muss bzw. am Heizbad angeordnet werden muss. Dabei ist es vorteilhaft, wenn das Deckteil beim Abheben des Rotationsgefässes automatisch nach oben weggeschwenkt wird, währenddem beim Absenken das Deckteil wieder in seine horizontale Arbeitsstellung abgeklappt wird.

Wie bereits oben erwähnt, eignet sich die erfindungsgemäss definierte Schutzvorrichtung bzw. das Heizbad insbesondere für die Verwendung bei einem Rotationsverdampfer. Allerdings kann die erfindungsgemäss definierte Schutzvorrichtung bei all denjenigen Laborgeräten bzw. chemischen Kleinanlagen verwendet werden, wo ein Heizbad zum Einsatz gelangt.

Die Erfindung wird nun anschliessend unter Bezug auf die beigefügten Figuren näher erläutert. Dabei zeigen:
Fig. 1 einen Rotationsverdampfer im Betrieb, wobei das Heizbad mittels einer erfindungsgemässen Schutzvorrichtung geschützt ist;
Fig. 2 den Rotationsverdampfer von Fig. 1 in Nichtbetriebsstellung und mit abgehobenem Deckteil, und
Fig. 3 den Rotationsverdampfer von Fig. 1 im Schnitt entlang der Linie I-I.

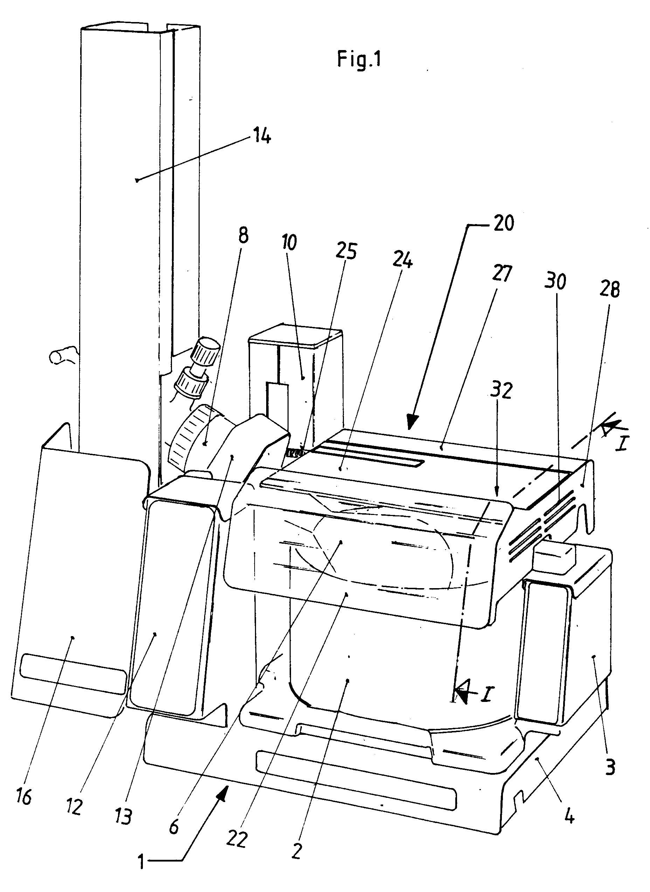

In Fig. 1 ist schematisch in Perspektive ein Rotationsverdampfer 1 dargestellt, umfassend ein Heizbad 2, beispielsweise geeignet für ein Wasser- oder ein Ölbad. Das Heizbad 2, angeordnet auf einer Konsole 4, wird mittels eines Heizaggregats bzw. einer Heizsteuerung 3 geregelt geheizt. Im Wasserbad angeordnet und in Fig. 1 nur gestrichelt sichtbar, ist ein Rotationskolben 6, welcher über eine Dampfleitverbindung 8 mit einem in Fig. 1 nicht sichtbaren Destillationskühler bzw. Destillationskolben verbunden ist. Für den Antrieb des Rotationsgefässes 6 dient eine Antriebselektronik 12 und ein Antrieb 13. Damit der Rotationskolben 6 in das Wasserbad abgesenkt bzw. aus diesem angehoben werden kann, ist weiter ein Stativprofil 10 mit Laufwagen vorgesehen.

Für den Schutz einer Betriebsperson vor Spritzern von Chemikalien, vor Dämpfen oder ggf. sogar von auftretenden Implosionen und Explosionen sind diverse Schutzelemente vorgesehen. So wird der Destillationskühler mittels eines Destillationskühlerschutzes 14 abgedeckt, währenddem weiter ein Vorlage- oder Auffangkolbenschutz 16 vorgesehen ist.

Erfindungsgemäss ist weiter eine Schutzvorrichtung 20 vorgesehen, um eine Bedienungsperson vor dem Heizbad bzw. vor dem Rotationskolben 6 zu schützen. Insbesondere im Falle eines Ölbades ist es wichtig, dass eine Bedienungsperson von möglichen Ölspritzern geschützt ist. Die erfindungsgemässe Schutzvorrichtung 20 umfasst einen transparenten Sichtschutz 22, der deshalb transparent ausgebildet sein muss, damit die Bedienungsperson visuellen Zugriff zum Rotationskolben 6 hat und somit die im Rotationskolben 6 stattfindende Reaktion überwachen kann. Dieser Sichtschutz ist vorzugsweise fest angeordnet, beispielsweise fest verbunden mit dem Heizbad oder mit einem Seitenschutz 28, um eine ausreichende Festigkeit im Falle von möglichen Implosionen und Explosionen aufzuweisen. Dieser Sichtschutz kann entweder aus bruchsicherem Glas hergestellt sein, oder aber aus einem transparenten Kunststoff, wie beispielsweise Polymetylmetacrylat (Acrylglas), Polycarbonat, transparentem Polyamid, wie beispielsweise Grilamit TR-55 der Ems-Chemie AG oder Irogamid der Dynamit-Nobel AG, oder aber auch aus Polysulfon, falls sehr hohe Anforderungen in bezug auf Wärmeformbeständigkeit und Chemikalienbeständigkeit gestellt sind. In jedem Falle ist das Material für den Sichtschutz entsprechend den Anforderungen zu wählen. Möglich ist auch, dass der Sichtschutz nur ein mittig angeordnetes Sichtfenster aufweist, im übrigen jedoch aus nicht-transparentem Material hergestellt ist, wie beispielsweise einem verstärkten Kunststoff. Denkbar wäre auch ein Metallgitter oder ein drahtgeflecht-ähnliches Gebilde, das, obwohl engmaschig, ausreichende Transparenz aufweist. Auch Glas mit eingegossenem Drahtgeflecht ist denkbar.

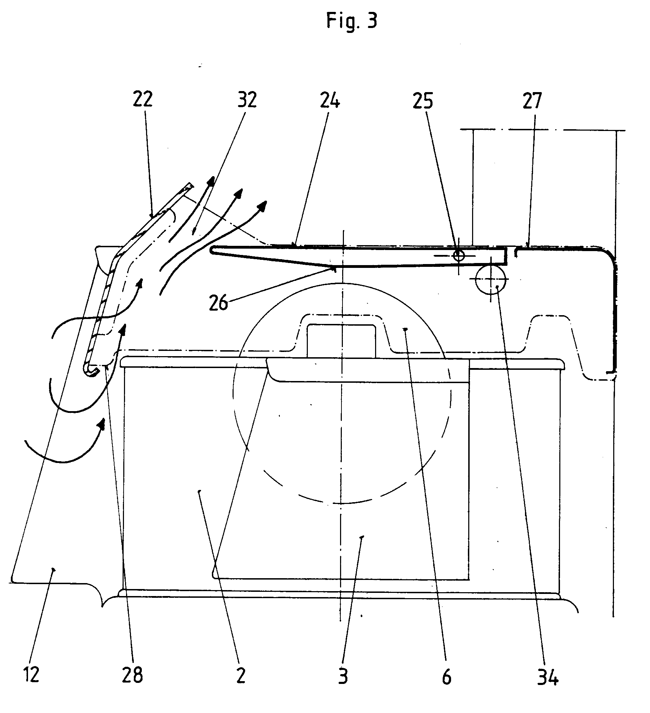

Im weiteren umfasst die erfindungsgemässe Schutzvorrichtung ein klappbares Deckteil bzw. einen Deckschutz 24, welcher um eine Klapp- oder Schwenkachse 25 nach oben aufgeklappt werden kann. Da dieses Deckteil nicht transparent ausgebildet werden muss, kann es beispielsweise aus Aluminium gefertigt sein, sodass es bei relativ kleinem Gewicht eine grosse Festigkeit garantiert. Hohe Festigkeit wiederum garantiert einen hohen Implosions- und Explosionsschutz. Damit dieser Deckschutz 24 im Falle von möglichen Implosionen und Explosionen nicht einfach nach oben abgeklappt wird, ist es vorteilhaft, wenn eine entsprechende Arretierung vorgesehen ist, auf welche unter Bezug auf Fig. 3 später näher eingegangen wird.

Die erfindungsgemässe Schutzvorrichtung kann weiter, wie bereits oben erwähnt, einen Seitenschutz 28 mit Belüftungsschlitzen 30 umfassen, sowie ein festes Rückteil 27.

Erfindungswesentlich ist nun, dass zwischen dem klappbaren Deckschutz 24 und dem frontseitig angeordneten Sichtschutz 22 ein Zwischenraum bzw. ein Spalt 32 ausgebildet ist, damit der Sichtschutz beim Betrieb des Heizbades hinterlüftet wird. Durch die Wärme des Heizbades wird ebenfalls die Luft hinter dem Sichtschutz erwärmt, womit sie aufsteigt. Durch das Ausbilden des erwähnten Zwischenraumes 32 kann diese aufsteigende Luft nach oben entweichen, womit hinter dem Sichtschutz ständig Luft zirkuliert und ein Beschlagen verunmöglicht wird. Dies ist wesentlich, damit die Bedienungsperson jederzeit die im Rotationskolben 6 durchgeführte chemische Reaktion überwachen kann.

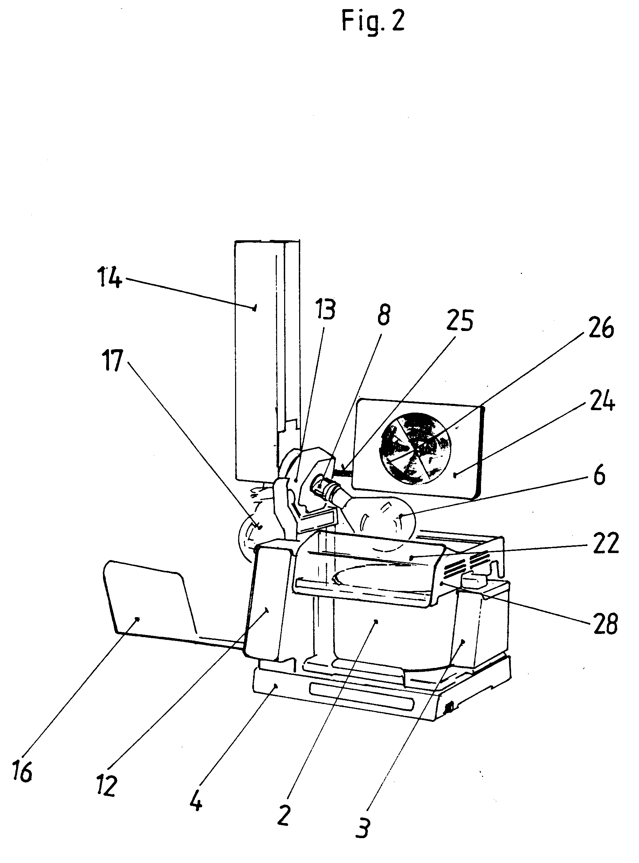

In Fig. 2 ist der Rotationsverdampfer 1 im Nichtbetriebszustand dargestellt, mit aus dem Wasserbad 2 angehobenem Rotationskolben 6. Dies erfogt dann, wenn beispielsweise die Vorlage im Rotationskolben 6 auszuwechseln ist, bzw. wenn die Reaktion abgeschlossen ist. Wie nun aus Fig. 2 in Ergänzung zu Fig. 1 erkennbar ist, kann an der Unterseite des Deckschutzes 24 ein Abtropfkegel 26 angeordnet werden. Der Vorteil eines derartigen Abtropfkegels liegt darin, dass vom Wasserbad aufsteigender Wasserdampf den Deckschutz nicht übermässig beschlägt oder seitlich entweicht, sondern an diesem Abtropfkegel kondensiert und so wieder ins Wasserbad zurücktropft.

Weiter in Fig. 2 ist erkennbar, dass beim Abheben des Rotationsgefässes 6 der Deckschutz 24 um seine Schwenkachse 25 nach oben weggeschwenkt wird. Dies ist notwendig, damit eine Bedienungsperson freien Zugriff zum Rotationskolben 6 hat. Auch der Vorlage- oder Auffangkolbenschutz 16 kann weggeschwenkt werden, um das Destillat aus dem Vorlage- oder Auffangkolben 17 zu entfernen.

In Fig. 3 schliesslich ist der Rotationsverdampfer aus Fig. 1 im Schnitt entlang der Linie I-I dargestellt. Aus dieser Darstellung ist deutlich erkennbar, dass beim Betreiben des Heizbades 2 die frontseitig angeordnete Schutzblende 22 hinterlüftet wird. Dies ist möglich, da zwischen dem Deckteil 24 und dem Sichtschutz 22 ein Zwischenraum bzw. ein Spalt 32 ausgebildet ist. Im weiteren ist in Fig. 3 erkennbar, dass der Sichtschutz 22 einen unteren, beinahe vertikalen Bereich aufweist, sowie einen oberen, stärker angeschrägten Abschnitt. Durch diese Ausbildung des frontseitigen Sichtschutzes wird die hinter dem Sichtschutz aufsteigende Luft am oberen Teil stärker abgelenkt, womit zusätzlich ein Beschlagen des Sichtschutzes verhindert wird. Selbstverständlich ist es auch möglich, den frontseitigen Sichtschutz konkav oder konvex auszubilden, womit ein analoger Effekt erzielt wird.

Weiter ist es möglich, dass der Sichtschutz austauschbar angeordnet ist, damit dieser je nach Anforderungen ausgewechselt werden kann. Auch ist es so möglich, dass beispielsweise bei Verwendung eines transparenten Kunststoffes der Sichtschutz leicht ausgewechselt werden kann, wenn die Transparenz infolge übermässigen Gebrauchs beeinträchtigt ist.

Weiter ist in Fig. 3 gestrichelt eine Sperre 34 vorgesehen, um das Deckteil 24 bei abgesenktem Rotationskolben 6 fest in Arbeits- bzw. in horizontaler Stellung zu halten. Damit wird ein Wegschwenken des Deckteils selbst im Falle von einer möglichen Implosion und Explosion verunmöglicht.

Die in den Figuren 1 bis 3 dargestellte Schutzvorrichtung stellt nur ein mögliches Beispiel dar, um die Erfindung näher zu erläutern. Selbstverständlich ist es möglich, die Schutzvorrichtung in x-beliebiger Art und Weise abzuändern, zu modifizieren oder durch weitere Elemente zu ergänzen. So ist es beispielsweise möglich, entsprechende Führungselemente vorzusehen, damit das Deckteil 24 beim Abheben des Rotationskolbens 6 automatisch nach oben abgeschwenkt wird. Auch ist es möglich, im Deckteil 24 Belüftungsrippen vorzusehen, um einer Überhitzung im Heizbad entgegenzuwirken. Im Gegensatz zum Deckteil im obgenannten Beispiel kann dieses selbstverständlich auch aus einem transparenten Kunststoff oder aus bruchsicherem Glas gefertigt sein. Erfindungswesentlich bleibt schliesslich, dass hinter dem frontseitig angeordneten Sichtschutz wenigstens entlang von Abschnitten ein oder mehrere Belüftungsschlitze bzw. ein Belüftungsspalt vorgesehen ist, damit dieser frontseitige Sichtschutz beim Betreiben des Heizbades hinterlüftet wird. Vorzugsweise ist der das Heizbad überdeckende Deckschutz nach oben klappbar bzw. wegschwenkbar ausgebildet.

## Patentansprüche

1. Schutzvorrichtung, insbesondere geeignet für ein Heizbad für Rotationsverdampfer, umfassend eine das Heizbad wenigstens teilweise überdeckende Schutzhaube, dadurch gekennzeichnet, dass die Schutzhaube mindestens zweiteilig ist, umfassend einen frontseitig am Heizbad angeordneten wenigstens teilweise transparenten Sichtschutz (22) und ein vorzugsweise vom Heizbad (2) abhebbares und/oder wegschwenkbares Deckteil (24), wobei zwischen Sichtschutz und Deckteil wenigstens entlang eines oder mehrerer Abschnitte ein Zwischenraum (32) ausgebildet ist, damit der Sichtschutz beim Betreiben des Heizbades zwangshinterlüftet wird.

2. Schutzvorrichtung, insbesondere nach Anspruch 1, dadurch gekennzeichnet, dass der Sichtschutz wenigstens nahezu fest insbesondere an einem Grundgehäuse bzw. am Heizbad und schräg angewinkelt in bezug zum Deckteil angeordnet ist und wenigstens teilweise aus einem transparenten Material wie Glas oder einem transparenten Kunststoff wie insbesondere Acrylglas (PMMA), Polycarbonat, etc., gefertigt ist.

3. Schutzvorrichtung, insbesondere nach einem der Ansprüche 1 oder 2, dadurch gekennzeichnet, dass das Deckteil um eine wenigstens nahezu endständige Achse (25) im Bereich des Heizbades entgegengesetzt zum Sichtschutz schwenkbar gelagert ist.

4. Schutzvorrichtung, insbesondere nach einem der Ansprüche 1 bis 3, dadurch gekennzeichnet, dass das Deckteilaus einem verstärkten Kunststoff oder aus Metall, wie insbesondere Eisenblech oder Aluminium oder einem Metallgitter bzw. Drahtgeflecht, gefertigt ist.

5. Schutzvorrichtung, insbesondere nach einem der Ansprüche 1 bis 4, dadurch gekennzeichnet, dass das Deckteil an seiner Unterseite einen Abtropfkegel (26) bzw. eine Abtropfglocke umfasst.

6. Schutzvorrichtung, insbesondere nach einem der Ansprüche 1 bis 5, dadurch gekennzeichnet, dass das Deckteil in Arbeitsstellung bzw. im abgeklappten Zustand arretierbar ist.

7. Schutzvorrichtung, insbesondere nach einem der Ansprüche 1 bis 6, dadurch gekennzeichnet, dass wenigstens ein weitgehendst fest mit dem Heizbad verbundener Seitenschutz (28), vorzugsweise mit Belüftungsmitteln (30) versehen, vorgesehen ist, mit welchem der Sichtschutz vorzugsweise wieder lösbar fest verbunden ist.

8. Heizbad mit Hebeeinrichtung für das Anheben und Absenken mindestens eines im Heizbad zu erwärmenden Reaktionsgefässes, umfassend eine Schutzvorrichtung, insbesondere nach einem der Ansprüche 1 bis 7, dadurch gekennzeichnet, dass das Deckteil mit der Hebeeinrichtung (10) verbunden ist, derart, dass beim Anheben des Rotationsgefässes (6) aus dem Heizbad das Deckteil (24) mitangehoben wird.

9. Heizbad, insbesondere nach Anspruch 8, dadurch gekennzeichnet, dass Mittel (34) vorgesehen sind, um das Deckteil beim Absenken in Arbeitsstellung in abgeklappte Stellung zu treiben und fest in dieser vorzugsweise weitgehendst horizontalen Stellung zu halten.

10. Verwendung des Heizbades für einen Rotationsverdampfer.
